# EUROPEAN PATENT APPLICATION

(11) **EP 0 913 762 A1**
(43) Date of publication of application: **06.05.1999**
(21) Application number: 97308780.2
(22) Date of filing: 31.10.1997
(51) Int. Cl.: G06F 3/06

(54) **Data encoding scheme**

(71) Applicant: Hewlett-Packard Company, Palo Alto, California 94304 (US)
(72) Inventor: Southwell, Simon David, Clifton, Bristol BS8 2JJ (GB)
(74) Representative: Lawman, Matthew John Mitchell

(57) **Abstract**

In a tape drive, or other storage device, used for storing computer data, both record data and record structure information such as file marks are encoded with codewords to form an encoded data stream. Of the fixed number of possible fixed-length codewords, one codeword is assigned as a root sequence for one or more longer codewords. Thus, detection of the root sequence during decoding of an encoded data stream triggers the reading of a fixed number of further bits. The further bits represent file marks and any other defined information.

In the tape drive (800), the tape drive interface (810) receives record data and file mark commands. The formatter (820) encodes the record data as fixed length codewords. Further, the formatter (820) encodes file mark commands and other format control information as longer codewords having a common root sequence (being one of the possible fixed length codewords) the bits of the longer codewords that extend beyond the root sequence determine the identity of file marks or other control information in the resulting encoded data stream, which is stored in a buffer (830). The longer, or reserved, codewords are thereby embedded in the encoded data stream to represent file marks as well as format control functions such as end of record markers and flush commands.

## Description

### Technical Field

The present invention relates to data storage, and in particular to encoding or formatting data for storage to, for example, a magnetic medium such as tape.

### Background Art

Taking data storage to tape as an example, a host computer system writes user data to a storage apparatus such as a tape drive on a per record basis. Records may be separated by inter-record gaps, or other record separators such as file marks or set marks, where record length is determined by the host computer.

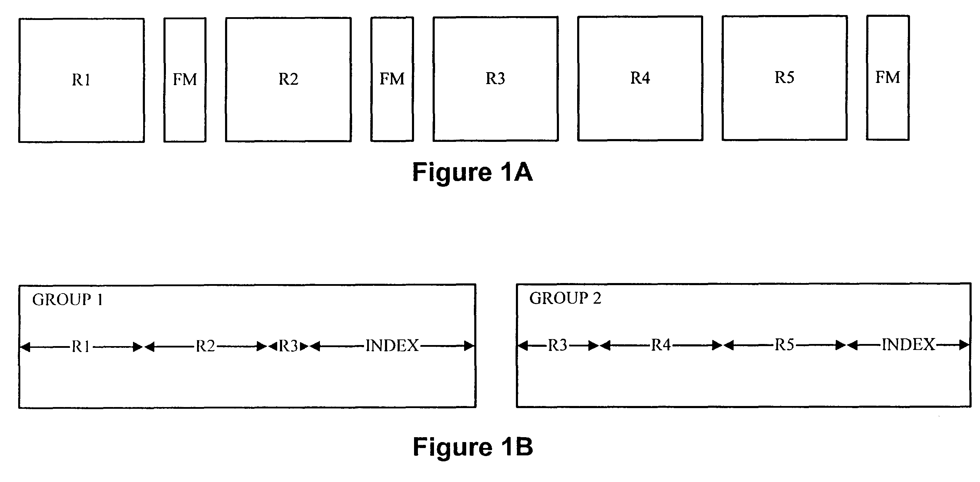

By way of background, the diagram in Figure 1(a) illustrates a logical sequence of user data and special separation marks that an existing type of host might write to a tape storage apparatus. In this example, the host supplies fixed-length records R1 to R5. In addition, the host supplies file marks which occur between data records.

It is known for a storage apparatus such as a tape drive to receive host data, arrange the data records into fixed size groups independently of the record structure, and represent the record structure, in terms of records and file marks, in an index associated with each group. Such a scheme forms the basis of the DDS (Digital Date Storage) data format standard for tape drives defined in ISO/IEC Standard 10777:1991 E. EP 0 324 542 describes one example of a DDS tape drive. Once the groups of data are formed, the tape drive stores the groups to tape, typically after applying some form of error detection/correction coding.

Thus, in such known schemes, a tape drive reading the data must rely on information in the index to reconstruct the original host for return to a host.

The diagram in Figure 1(b) illustrates the organisation into groups of the host data shown in Figure 1(a). In this example, the host data is organized into fixed-size groups each including an index for containing information about the contents of the group. All information, which describes the structure of the data in a group in terms of records and File marks, is held in the index of the group. In the present example, records R1, R2 and a part of record R3 are in the first group, and the remainder of record R3 and records R4 and R5 are in the second group.

The length of the index, and the corresponding space remaining for record data, in a group will generally vary according to the number of separation marks and the number of records present in the group.

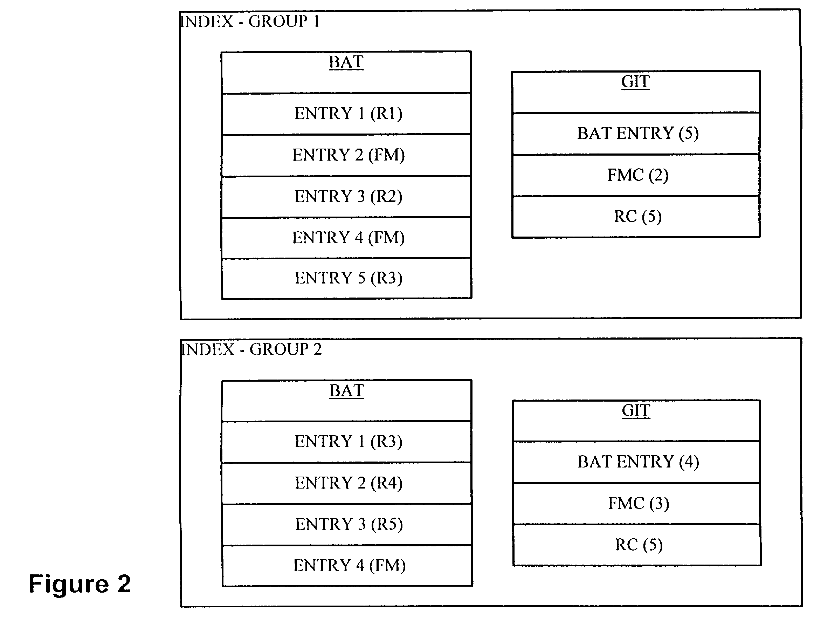

Figure 2 illustrates very generally the form of the indexes for both groups shown in Figure 1(b). As shown, each index comprises two main data structures, namely a block access table (BAT) and a group information table (GIT). The number of entries in the BAT is stored in a BAT entry field in the GIT. The GIT also contains various counts, such as a file mark count (FMC) which is the number of FMs written since the beginning of recording (BOR) mark, including any contained in the current group, and record count (RC), which is the number of records written since the beginning of recording (BOR) mark, including any contained in the current group. The values for the entries in this simple example are shown in parentheses. The GIT may contain other information such as the respective numbers of file marks and records which occur in the current group only.

The BAT describes, by way of a series of entries, the contents of a group and, in particular, the logical segmentation of the record data held in the group (that is, it holds entries describing the length of each record and separator mark in the group). The access entries in the BAT follow in the order of the contents of the group, while the BAT itself grows from the end of the group inwardly to meet the record data.

The space and performance overhead of a having a BAT may become restrictive in the event records received from the host are small or there are a relatively high proportion of file marks compared with the number of records. In terms of space, more file marks mean that the BAT grows and the room for records in a group shrinks. In terms of performance, each time a file mark is encountered, the processing of the data stream needs to re-direct to up-date the BAT. It should be noted that the reason for the records being small or there being a large number of file marks remains unknown to, and not under the control of, the storage apparatus. Indeed, an element of prediction is required on the part of the tape drive as a group nears completion, since there is no way of telling whether the next data from the host will be user data or record separator information.

### Disclosure of the Invention

The applicant's co-pending patent application, filed on the same date here as (HP's reference 30970017), describes an invention wherein the requirement for an index is removed by embedding special, reserved codewords, representing host data structure information, such as file marks, and format control information respectively, into the encoded data stream. The present invention provides an extremely convenient scheme for encoding the host data along with the reserved codewords.

Therefore, in accordance with a first aspect, the present invention provides a method of formatting host data, including the step of:
encoding members of a pre-defined group of data with m-bit codewords and encoding other data with codewords in excess of m-bits long to produce an encoded data stream, wherein all other data are encoded with codewords which have a common m-bit root sequence, and wherein the common m-bit root sequence is not itself representative of any of the members of the pre-defined group of data.

Embodiments of the invention are particularly advantageous for encoding host data to which data compression is not applied. For example, if the host data is ASCII-based, the group members could be the ASCII character set, and there would be a one-to-one relationship between each ASCII character and a codeword. Thus, codewords representative of other data, such as host data structure information (e.g. file marks or set marks) or format control data, can be included in the encoding scheme for the uncompressed data without causing significant expansion of the encoded data.

In accordance with the invention, there can be at least 2^{m} codewords, 2^{m}-1 of which are free to represent members of the group. In other words, the m-bit root sequence is not free itself to represent a member of the group. In a practical embodiment, the m-bit root sequence is detected during data decoding as being the start of a reserved codeword that has a length greater than m bits. Obviously, the number of bits following the root sequence for reserved codewords determines how many reserved codewords there can be in the format.

In accordance with one embodiment, there are 2^{m} members in the first group of data and the reserved m-bit root sequence forms part of a longer p-bit codeword, which is reserved to represent one of the 2^{m} possible members.

The advantage here is that there are 2^{m} codewords available to represent members of the group. For example, where m=8, 2⁸-1 (i.e.255) of the codewords are 8-bits long and the 2⁸ th (i.e. 256th) codeword is, for example, 9-bits long. The state of the 9th bit determines whether the 9-bit codeword is the 256th character, or whether the 9-bit codeword is a further root sequence for other reserved codewords, which can be 10 or more bits long.

In the preferred embodiment to be described, the length of reserved codewords (including the root sequence), n, is 13. Then, the state of the 9th bit after the root sequence either indicates that the 9-bits represent the 2^{m}th member of the group, or that the next 4-bits (i.e. 13 bits in total) represent one of 16 possible reserved codewords.

Other aspects of the present invention, particularly apparatus to enact the method, which are claimed herein, will become apparent from the following description. Further, some aspects of the invention relate to methods and apparatus for reading and/or decoding data which has been formatted or encoded as described herein.

### Brief Description of the Drawings

An embodiment of the present invention will now be described, by way of example only, with reference to the drawings, of which:
Figure 1a is a diagram which illustrates the general form of host data from a host computer;
Figure 1b is a diagram which illustrates grouping of the host data of Figure 1a in accordance with a prior art technique for formatting host data;
Figure 2 is a diagram which illustrates in a more detailed fashion the type of data which is stored in an index of a data group of Figure 1b;
Figures 3a and 3b are diagrams which illustrates two common formats by which data can be written to tape;
Figure 4 is a diagram which illustrates the general form of data encoded in accordance with an embodiment of the present invention;
Figure 5 is a diagram which illustrates the general form of a data set as defined in accordance with an embodiment of the present invention;
Figure 6 is a table of reserved codewords as defined in accordance with an embodiment of the present invention;
Figure 7 is a table of data set information table entries as defined in accordance with an embodiment of the present invention;
Figure 8 is a block diagram representation of a tape drive architecture for formatting data in accordance with an embodiment of the present invention;
Figure 9 is a block diagram representation of the major parts of a formatter which formats data in accordance with an embodiment of the present invention;
Figure 10 is a flow diagram which illustrates the steps involved in encoding data in accordance with an embodiment of the present invention; and
Figure 11 is a flow diagram which illustrates the steps involved in packing data encoded in accordance with an embodiment of the present invention.

### Best Mode for Carrying Out the Invention, & Industrial Applicability

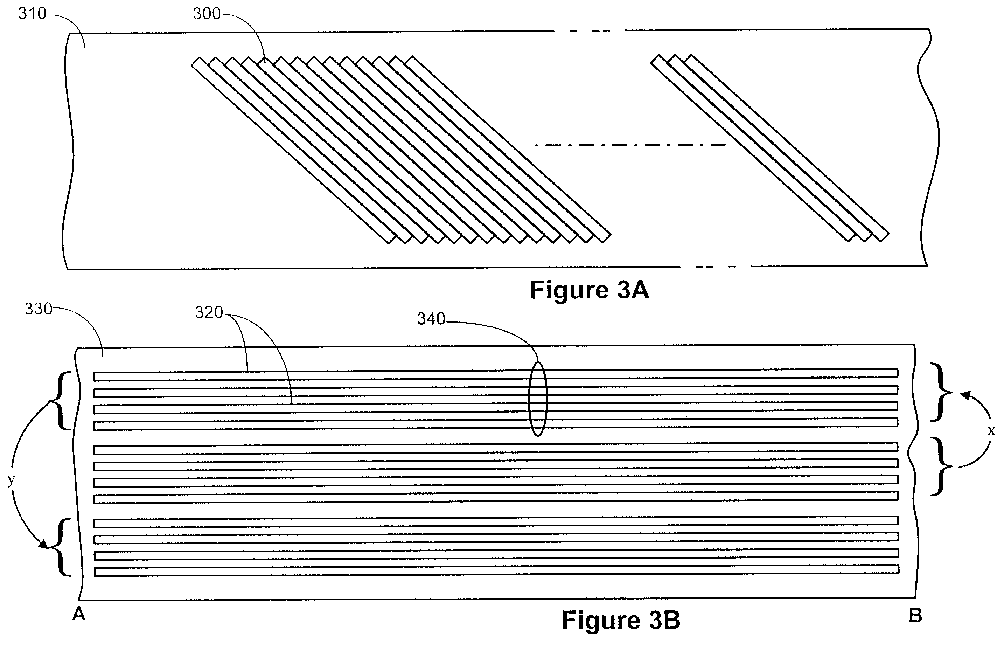

Figures 3a and 3b illustrate the two main general ways in which data is written to tape. In Figure 3a, the data is written as a series of oblique tracks 300 along the length of the tape 310, from one end to the other. This type of data storage is generally known as helical scan, and relies on a tape drive which has a rotating drum comprising, typically, four heads; two for reading and two for writing. Such tape drives are well known and form the basis for the DDS data storage standards mentioned above.

Figure 3b illustrates data written as a series of parallel channels 320 along the length of the tape 330. This technique is commonly known as linear data recording. In the diagram, a group of four parallel channels, which together are known as a track 340, are written by a fixed, multi-channel head from one end of the tape A to the other B. When the head has written data to the end of the tape, B, the head offsets, by x, and the tape is rewound so that data can be written in the reverse direction, back to the other end of the tape, A. This process can continue until the whole width of the tape has been used. Further details of how the data is arranged and written to tape by this linear technique are given in the applicants two copending European patent applications, filed on the same date here as (HP's references 30970026 and 30970045), the contents of which are incorporated herein by reference.

Either of the above-mentioned techniques could be used to write to tape data formatted in accordance with the present embodiment. Indeed, the data format described below is tape, and tape writing technology, independent. The data format is, however, expected to be particularly advantageous when directed to linear tape recording techniques.

### FORMAT OVERVIEW

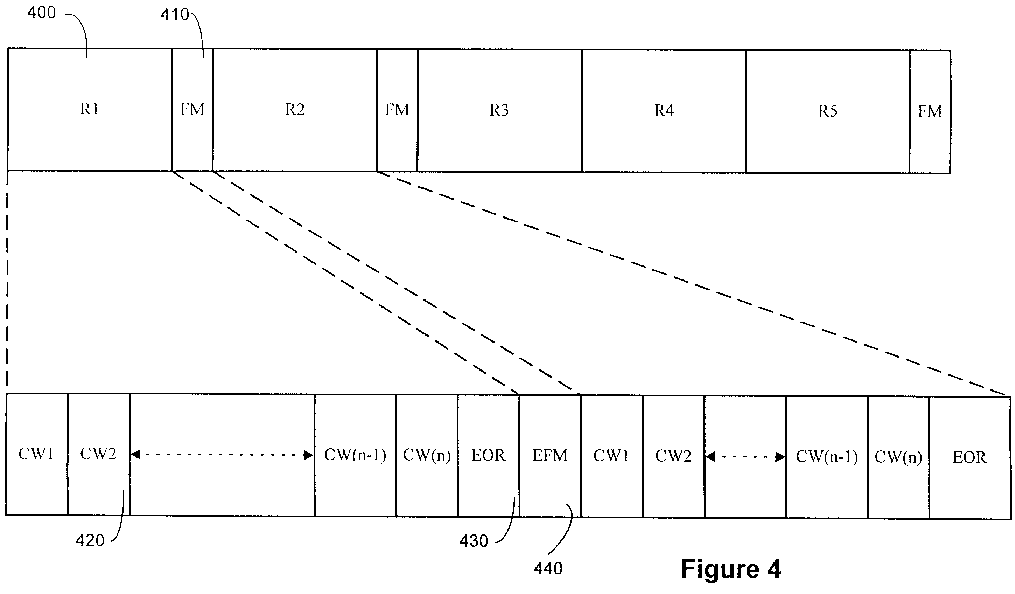

As illustrated in the diagram in Figure 4, the smallest collection of data recognised by the format is a Record 400. A Record 400 is the smallest distinct set of data bytes supplied by a host computer for processing by a tape drive, and the smallest distinct set of data reprocessed and made available to the host computer by the tape drive. Records, are received from the host computer, each having a 4-byte CRC computed and appended to it. The Record 400 and CRC together can be referred to as a Protected Record.

File marks 410 are transmitted by the host computer to indicate the logical separation(s) of the data Records 400. For example, text documents stored on a computer typically each comprise a number of records worth of data. The text documents would therefore each be sent to a tape drive as a series of records, and a file mark would be sent alter each document to indicate the end of one document and the beginning of the next. In general, file marks are sent to the tape drive as file mark commands, to be dealt with in an appropriate fashion.

The data in each Record 400 is encoded, where possible by a data compression (DC) scheme, into a series of data codewords (CW), generally labelled 420. The end of each record is denoted by a special, reserved End of Record codeword (EOR), generally labelled 430. File marks are denoted by a special, reserved codewords (EFM), generally labelled 430, so that the stream of codewords is continuous.

The codeword stream (including reserved codewords) is arranged into data set form, and thereafter a series of transformations, including the generation and inclusion of two Reed-Solomon error correcting codes, are applied to the data in each data set prior to recording the data to tape.

In the following description all operations on the data received from the host computer, up to before the application of error detecting and correcting codes, are described.

### DATA SETS

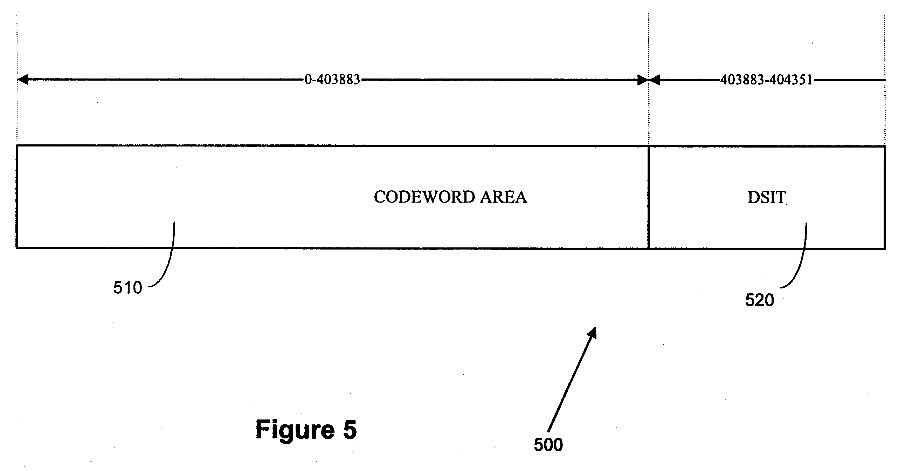

The codewords are grouped in data sets consisting of 404,352 bytes of data, as shown in the diagram in Figure 5. Each data set 500 comprises a codeword area 510 and a data set information table (DSIT) area 520. Each data set is identified by a running number allocated consecutively starting with zero. In each data set the bytes are identified by a running number from 0 to 404,351 and the codewords are arranged in the data set from left to right, from byte 0.

Before being Recorded to tape, each data set is protected by C1 and C2 Error Correction Coding (ECC). The ECC applied to data sets prior to them being written to tape is described in detail in the applicants co-pending patent applications (HP's refs; 30970026 & 30970045), the contents of which are hereby incorporated by reference.

### PROCESSED DATA CODEWORDS

Where possible, data is processed using a DC algorithm which is based on an implementation of LZI sliding dictionary compression technology, known as ALDC-2. The ALDC-2 algorithm encodes byte-wide data through the use of a 1024-byte history buffer and outputs a sequence of data codewords representing either single bytes (literals) or references to strings of bytes in the history buffer. ALDC-2 is an ECMA (ECMA-222) and QIC (QIC-154) standard, and is not described in detail herein.

For the purposes of the present embodiment, data processing is extended beyond straightforward ALDC-2 to incorporate:
The ability to switch between two encoding schemes; one for compressing data (Scheme 1) and one for passing it through uncompressed (Scheme 2). All data is passed through the history buffer, whichever scheme is in use.
Reserved codewords; for identifying host data structure information such as file marks and control information such as resets, encoding scheme, Record boundaries, flush points and end markers.

The codewords are 'bit-packed', for both scheme 1 and scheme 2, into 32-bit words for storage in the data set codeword area 510, with the bit order reversed such that the most significant bits are output or encountered first. Bit-packing will be described in more detail below.

### MULTIPLE DATA COMPRESSION SCHEMES

The data compression algorithm consists of two different schemes, either of which can be selected according to the characteristics of the data being processed. Scheme 1 reduces the redundancy of the data by use of backward references to data in the history buffer, whereas Scheme 2 only copies the data through. Scheme 2 is provided to protect against data which has little or no redundancy, and which can actually cause expansion in Scheme 1. Such incompressible data may be graphical data, or data which is already compressed.

The scheme in use can be changed within a Record by use of a 13-bit reserved codeword (which can be the first codeword of that Record, as described below), or can be set before a Record, by use of the same 13-bit reserved codeword followed by a Flush reserved codeword (to be described), making it essentially a 32-bit codeword.

All data is passed through the history buffer whichever scheme is in operation. After a change from Scheme 2 to Scheme 1 it is possible to use Scheme 1 backward references to data in the history buffer that was processed using Scheme 2. It is as if the data output in Scheme 2 had been output as literals in Scheme 1.

The history buffer does not have to be reset when changing schemes unless there is another reason to do so such as at an Access Point, or possibly when appending. A reset will typically cause a potential short term reduction of compression ratio, as the history buffer will need to re-charge to provide meaningful backward references.

### SCHEME 1 DATA CODEWORDS

Scheme 1 is used to compress data and outputs two types of data codeword:
Literals - a 9 bit codeword consisting of a '0' followed by the 8-bit byte being encoded; and
Backward references - a variable length codeword consisting of a '1' followed by a variable length 2 to 12-bit (depending on the data being encoded) field denoting the match length in bytes, followed by a 10-bit field denoting the location of the start of the backward reference in the history buffer. Thus, a backward reference can be a 13 to 23-bit codeword.

### SCHEME 2 DATA CODEWORDS

Scheme 2 is used to encode data such that it is minimally expanded. It can be used for data which is random in nature, for example data that is already compressed. Scheme 2 outputs two types of data codeword:
Unencoded literals - for 8-bit data values in the range 0x00 to 0xFE, an 8-bit data codeword is output which is a copy of the 8-bit input; and
Encoded literals - for the 8-bit data value 0xFF, the 9-bit codeword 1111.1111.0₂ is output.

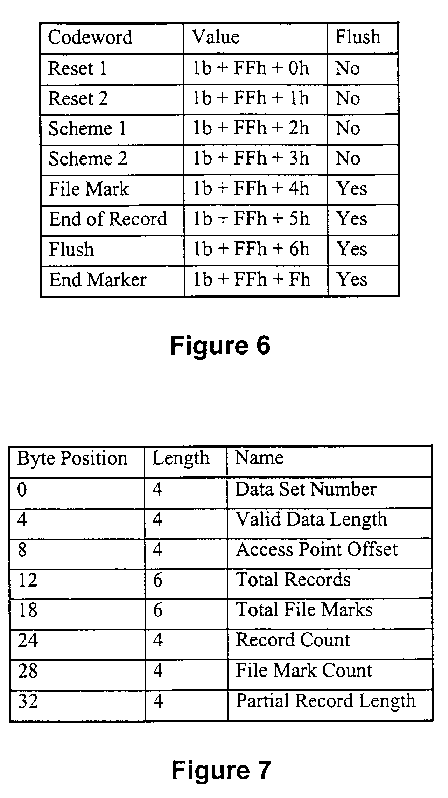

Scheme 2 allows the use of a number of 13-bit reserved codewords in which the first 9-bits are 1111.1111.1₂ and the following 4-bits are a control value. The Table in Figure 6 lists the valid 13-bit reserved codewords and their meanings.

As mentioned, input data is always passed through the history buffer, whichever Scheme is in use, so that it is possible to have a backward reference to data which was processed using Scheme 2 whilst in Scheme 1.

### RESERVED CODEWORDS

Reserved codewords are used to control the operation of the DC process (and respective decompression process) and also to encode host related information such as File Marks. The 13-bit reserved codewords are defined to be the same for both schemes.

To allow for any appending of data alter a reserved codeword, those reserved codewords which represent appendable points, are forced to align with, or are flushed to, the next 32-bit word boundary in the codeword bit stream. This requirement is also shown in the Table in Figure 6.

The reserved codewords which must be aligned, or flushed, with a 32-bit word boundary are padded with 0's, with the exception of the End Marker codeword which is padded with 1's. This causes the File Mark codeword to be the 32-bit constant; FF980000ₕ and the End Marker codeword to be the 32-bit constant; FFFFFFFFₕ.

Now follows a more detailed explanation of each embedded reserved codeword.

### Reset 1

Whenever a Reset 1 codeword is encountered, the history buffer is reset (that is to say, subsequent data is put at the start of the buffer), and all data codewords which follow are Scheme 1 data codewords. This applies until either a Reset 2 or Scheme 2 codeword is encountered.

A Reset 1 codeword is used both inside and outside of a Record; inside it does not have to be flushed whereas outside it will always begin on a 32-bit boundary, and will always be followed immediately by a Flush codeword.

A Reset 1 codeword can be output as the first codeword of a Record, in which case it is considered to be inside the Record and need not be followed by a Flush codeword.

Reset 1 codewords are written at Access Points to ensure that decompression can begin at that point without knowledge of previous data. An Access Point is the point in a data set where data decompression can begin. Backward references after an Access Point can only refer to data in the history buffer received after that Access Point. Decompression can continue across an Access Point seamlessly, without the need to reference the DSIT.

A reset will cause a potential, short term reduction of compression ratio, as the history buffer needs to be re-filled.

### Reset 2

Whenever a Reset 2 codeword is encountered, the history buffer is reset (that is to say, subsequent data is put at the start of the buffer), and all data codewords which follow are Scheme 2 data codewords. This applies until either a Reset 1 or Scheme 1 codeword is encountered.

A Reset 2 codeword is used both inside and outside of a Record; inside it does not have to be flushed whereas outside it will always begin on a 32-bit boundary and will always be followed immediately by a Flush codeword.

A Reset 2 codeword can be output as the first codeword of a Record, in which case it is considered to be inside the Record and need not be followed by a Flush codeword.

Reset 2 codewords are written at Access Points to ensure that decompression can begin at that point without knowledge of previous data. An Access Point is the point in a data set where data decompression can begin. Backward references after an Access Point can only refer to data in the history buffer received after that Access Point. Decompression can continue across an Access Point seamlessly without the need to reference the DSIT.

### Scheme 1

A Scheme 1 codeword indicates that all data codewords which follow are Scheme 1 data codewords, and this applies until either a Reset 2 or Scheme 2 codeword is encountered. A Scheme 1 codeword can be used both inside and outside of a Record; inside it does not have to be flushed whereas outside it will always begin on a 32-bit boundary and will always be followed immediately by a Flush codeword.

A Scheme 1 codeword can be output as the first codeword of a Record, in which case it is considered to be inside the Record and need not be followed by a Flush codeword.

### Scheme 2

A Scheme 2 codeword indicates that all data codewords which follow are Scheme 2 data codewords, and this applies until either a Reset 1 or Scheme 1 codeword is encountered. It is used both inside and outside of a Record; inside it does not have to be flushed whereas outside it will always begin on a 32-bit boundary and will always be followed immediately by a Flush codeword.

A Scheme 2 codeword can be output as the first codeword of a Record, in which case it is considered to be inside the Record and need not be followed by a Flush codeword.

### File Mark

A File Mark codeword represents a File Mark and therefore can never occur within a Record. A File Mark codeword always begins on a 32-bit boundary and is padded with zeros up to the next 32-bit boundary so can therefore be treated as the 32-bit constant: 1.1111.1111.0100 + 000.0000.0000.0000.0000₂ = FF980000ₕ.

### End of Record

An End of Record codeword indicates the last codeword of a Record, and therefore can never occur outside of a Record. Following this codeword will be zero to thirty-one 0's to pad to the next 32-bit boundary.

### Flush

A Flush codeword causes the next codeword to start on the next 32-bit boundary and is therefore followed by zero to thirty-one 0's to pad to this boundary. A Flush codeword is used both inside and outside of Records; inside to force a mid-Record codeword to line up with a 32-bit boundary, and outside to follow immediately alter Scheme X and Reset X codewords, thereby assuring that any following Record, File Mark and End Marker codewords begin on a 32-bit boundary.

Using the Flush codeword outside of a Record can allow the Reset X and Scheme X codewords to be treated as 32-bit constants:
Reset 1 / Flush is 1.1111.1111.0000 + 1.1111.1111.0110 + 000000₂ = FFAFFC00ₕ
Reset 2 / Flush is 1.1111.1111.0001 + 1.1111.1111.0110 + 000000₂ = FFB7FC00ₕ
Scheme 1 / Flush is 1.1111.1111.0010 + 1.1111.1111.0110 + 000000₂ = FF8FFC00ₕ
Scheme 2 / Flush is 1.1111.1111.0011 + 1.1111.1111.0110 + 000000₂ = FF97FC00ₕ

In these cases, Flush codewords always begin on the 14th bit of a 32-bit word.

The Flush codeword can be used to line up any arbitrary point in the host data stream with a word boundary in the encoded data stream. An example of when this facility can be very useful is given below.

### End Marker

An End Marker codeword indicates that any data following it within a data set has no meaning (though it is still covered by the ECC) and is used to stop decompression for the remainder of the data set in which it is encountered. An End Marker codeword cannot be written within a Record and thus always begins on a 32-bit boundary.

A End Marker codeword is padded with 1's to the next 32-bit boundary, so can be treated as a 32-bit constant: 1.1111.1111.1111 + 111.1111.1111.1111.1111₂ = FFFFFFFFₕ. The end marker is the only codeword which is padded with 1's.

The End Marker codeword can be repeated as a 32-bit pad value to fill out the unused area of a data set, but this is optional. The data area between the End Marker codeword and the DSIT has no meaning.

### ACCESS POINTS

Access points are used to designate the position at which the history buffer is reset and at which decompression of data in a data set can begin. There is, at most, one Access Point per data-set, the location of which is held in the DSIT. If access to a Record or File Mark beyond an Access Point is required, then decompression must begin at that Access Point and continue until the target is reached.

An Access Point is positioned immediately following the end of any Record spanning into a data set from a previous data set, or at the beginning of a data set if no such spanning occurred. In the first data set (data set 0), the Access Point is at the beginning of the data set. If the Record spanning into the data set is so long that it also spans out into the following data set, then there is no valid Access Point, and the content of the Access Point field in the DSIT is set to FFFFFFFFₕ to indicate this.

At an Access Point, the history buffer is reset, and one of the codewords (Reset 1 or Reset 2) precedes any Record data ensuring that the encoding scheme is defined before any data is written or encountered. This allows File Mark codewords to be written at an Access Point before the encoding scheme is defined - reserved codewords are the same in both schemes. The appropriate Reset codeword is used, depending on which processing scheme is required from that point.

At an Access Point there must be one of:
Reset X followed by Flush;
Reset X followed by Record data;
End Marker; or
File Mark followed by any of the above.

The history buffer reset prevents backward references being output, after an Access Point, which refer to data input before the Access Point. Thus, decompression always begins at the Access Point.

### WORD SIZE ALIGNMENT AND APPEND POINTS

The data processing process, to be described, uses a processed data word size of 32-bits. Therefore, whenever a codeword is required to be flushed to a word boundary, that codeword is padded with zeroes (except for an End Marker codeword which is padded with ones) up to the next 32-bit word boundary before being written to the data set.

Append points always follow one of; EOR, File Mark or Flush point, and this ensures that all append points are coincident with a 32-bit word boundary.

When appending at an Access Point, a Reset X codeword is always written before any Record data, consistent with the rules of Access Points. When appending at any other append point, a Scheme X codeword may be written, but is not required if data is written using the same scheme as the Record data preceding it.

### DATA SET FILLING

If only a part of a data set is filled with codewords, and is required to be written to tape, then it is completed before the rest of the formatting stages proceed. If a Record is not complete it is terminated with an End Of Record codeword. The last valid codeword is then followed by an End Marker codeword, unless that position is coincident with the DSIT (in this case it is not a partial data set). Optionally, the rest of the data set can be filled with End Marker codewords.

The number of bytes that are occupied by the codewords up to, but not including, the End Marker codeword are stored in the Valid Data Length field in the DSIT for the data set, as will be described in more detail below.

### DATA SET INFORMATION TABLE

The contents of a DSIT are shown in the Table in Figure 7, and will now be described.

In the Table, the most-significant byte is the lowest-numbered byte position and the least-significant byte is the highest-numbered byte position.

### Data Set Number

This 4-byte field is the ordinal number of the data set from the beginning of the tape (BOT), starting with zero.

### Valid Data Length

This 4-byte field indicates the number of complete bytes of the data set that are used to contain processed codewords, up to, but not including, any End Marker that may exist within the data set.

### Access Point Offset

This 4-byte field is the byte offset, within the data set, of the Access Point. This count is from the beginning of the DSIT, starting at byte 0. Therefore, if the Access Point was the first byte of the data set, then the Access Point Offset would be Zero. If there is no Access Point within the data set, then this field is set to all ones (that is FFFFFFFFₕ).

A 'Current Access Point' is defined herein as the Access Point that exists in the present data set, or, if there is no Access Point in a data set, the latest previous Access Point.

A 'Next Access Point' is defined herein as the first Access Point that occurs in a subsequent data set.

### Total Records

This 6-byte field specifies the count of all Records that have been completely processed in all data sets from BOT up to the Current Access Point.

### Total File Marks

This 6-byte field specifies the count of all File Marks that have been processed in all data sets from BOT up to the Current Access Point.

### Record Count

This 4-byte field specifies the number of Records that exist between the Current Access Point and the Next Access Point.

Hence, if a Record starts in a previous data set, and ends in the present one, then that Record is not counted. If there are no Access Points in the present data set, then there are no Records starting, or ending, within this data set, and so the Record Count is the same as the Record Count in the DSIT of the previous data set. If a Record starts in the present data set, but is not completed until a subsequent data set, then it is counted. Hence, it is not possible to have an Access Point within a data set, and also to have a Record Count of Zero. Also, in accordance with the present embodiment, File Marks are not counted as Records.

### File Mark Count

This 4-byte field specifies the number of File Marks written between the Current Access Point and the Next Access Point.

### Partial Record Length

This 4-byte field specifies how many bytes of data are in the last record of the current data set, if the record does not end in the data set. Otherwise, the value is zero.

The remaining DSIT fields, from bytes 36 to 468 are either for vendor-specific information or for tape usage information, and do not relate to the present data format as such. The remaining DSIT fields will thus not be described further in this description.

### TAPE DRIVE ARCHITECTURE

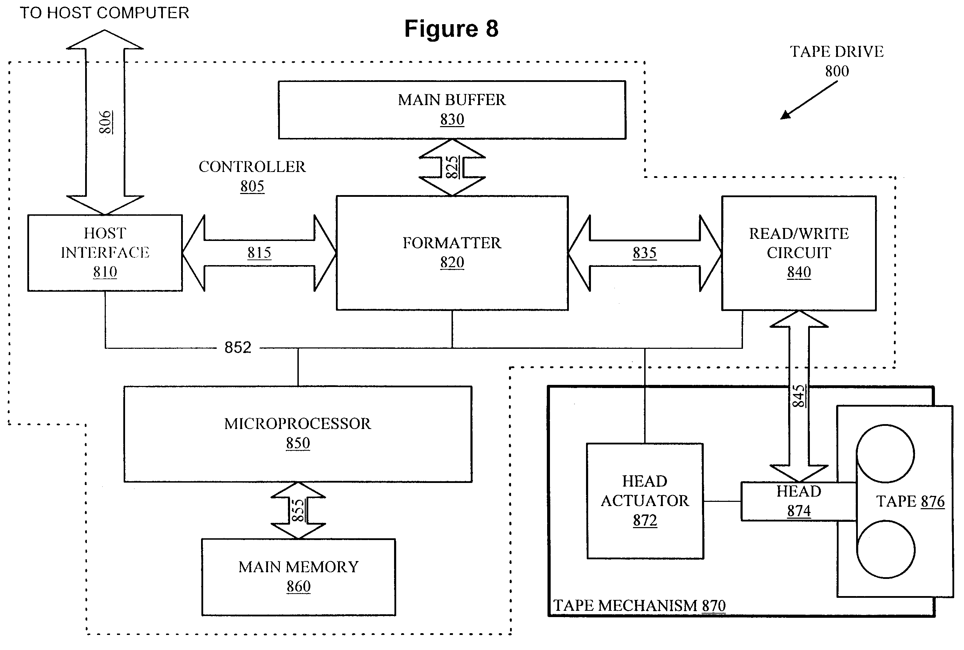

An exemplary architecture for a tape drive, for storing and recovering data to and from tape in accordance with the present embodiment, is illustrated in the diagram in Figure 8.

Referring to Figure 8, a host computer (not shown) is connected to a tape drive 800 via a SCSI bus 806. It is assumed herein that the host computer has loaded therein appropriate 'driver' software with which it can communicate in SCSI (small computer system interface) with the tape drive 800.

In a 'write' operation, the tape drive 800 receives data to be backed-up to tape 876 from the host computer and in a 'read' operation the tape drive 800 sends data retrieved from tape 876 back to the host computer. In the embodiment described herein, the SCSI bus 806 connects the tape drive 800 to the host computer. It will, however, be appreciated that any one of a number of other common interface types could be used.

The tape drive 800 described herein is arranged to store and retrieve data in accordance with the format of the present embodiment. In Figure 8, the tape drive 800 comprises a tape mechanism 870, and all the other components form what is generally known as a controller 805.

The controller 805 comprises a series of ASICs (application specific integrated circuits) each programmed with firmware to carry out a specific data processing operation. The ASICs are: a host interface 810, for transferring data between the host and the tape drive 800 across the SCSI bus 806; a formatter 820, connected to the host interface 810 by a first data bus 815; and a read/write circuit 840 connected to the formatter 820 by a second data bus 835. Also included is a main buffer 830, for storing therein data in data set form, which is connected to the formatter 820 by a memory bus 825. The main buffer comprises a block of DRAM which is sufficient in size to store therein at least one data set.

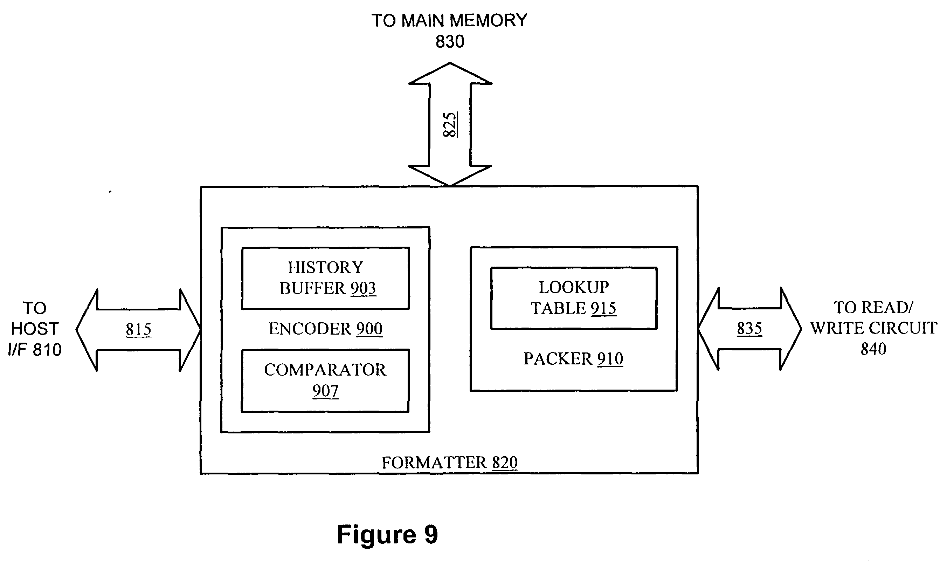

The main functional elements of the formatter 820 are illustrated in more detail in the diagram in Figure 9. As shown, the formatter 820 comprises: an encoder 900 for encoding received host data bytes as Scheme X codewords; a history buffer 903; a comparator 907 for determining whether the encoder 900 should apply Scheme 1 or Scheme 2 codewords to the host data; a packer 910 for arranging codewords into an encoded data stream in terms of 32-bit word boundaries; and a lookup table 915 used by the packer 910 to interpret which codewords are reserved codewords.

The controller 805 further comprises a microprocessor 850, for example a Motorola 68000 series microprocessor, and main random access memory (RAM) 860 accessible by the microprocessor 850. The microprocessor 850 is controlled by instructions stored in the main memory 860 to control all elements of the drive 805, as will be described. The microprocessor 850 is connected to the other elements of the tape drive via a system bus 852 and controls the overall operation of each element of the tape drive.

The tape mechanism 870 includes: a read/write head 874 connected to the read/write circuit 840 by a third data bus 845; and a head actuator 833 for controlling the movement of the head 874. These elements are known in respect of DDS or linear data recording techniques, and will not therefore be considered in more detail.

The first data bus 815, for transferring data between the host interface 810 and the formatter 820, comprises a 16-bit data channel and 2-bit control channel. The second and third data buses, labeled 835 and 845 respectively, comprise 16-bit data channels. The actual widths of the data channels are not important, notwithstanding that wider channels which can carry more bits in parallel, can provide a faster processing pipeline.

### TAPE DRIVE OPERATION

In tape drive 800, the host interface 810 receives data from the host computer via the SCSI bus 806. If the data is command data (for example load, unload, space, request read or request write), the host interface 810 passes the data to the microprocessor 850, and the microprocessor controls the tape drive 800 to operate accordingly.

For a write operation, if the data is record data to be stored to tape, the host interface 810 transmits the data to the formatter 820 to be encoded and compressed where possible into an encoded data stream. The formatter 820 interacts with the history buffer 903 and the comparator 907 for the purposes of encoding and compressing the bytes of record data. The packer 941 'packs' the codewords in the stream in accordance with the flushing requirements of the present format. The lookup table 915 contains information relating to the reserved codewords, which enables the packer 910 to recognise the reserved codewords in the data stream and pack them appropriately. The encoded and packed data is transferred to the main buffer 830.

The formatter also applies error correction coding (ECC) to the data, prior to sending the data to the read/write circuit 840. Possible ECC schemes and the implementation thereof are beyond the scope of the present description, but are described in detail in the applicant's co-pending patent applications numbered (30970026 and 30970045), the contents of which are hereby incorporated herein by reference.

The read/write circuit 840 receives the ECC-encoded data and converts the data into signals suitable for driving the read/write head(s) 874. The head actuator 872 moves the head 874 in relation to the tape 876, and the tape mechanism 870 moves the tape 876 in relation to the head 874, for the purposes of writing data. As already stated, tape decks suitable for operation in the present embodiment are generally known in the art of tape storage, and will not therefore be considered in any further detail herein.

For a read operation, the components described above in relation to writing data operate in reverse to read data from tape, remove ECC, unpack and decode the data recovered from tape 876, and pass the data back to the host 810.

The operation of some elements of the controller will now be described in more detail.

### HOST INTERFACE

For a write operation, the host transmits a write request to the host interface 810 to write a record or File Mark. Whether or not the tape drive accepts the request is determined indirectly by the formatter 820, as will be described. Also, the timing of data transfer from the host to the host interface 810, and from the host interface 810 to the formatter 820, is determined by the formatter 820. The write process itself is controlled by the microprocessor 850.

On receipt of a write request from the host computer, to write a data record, the host interface 810 requests permission to send a record's worth of data to the formatter 820 by sending a request signal to the microprocessor 850. The microprocessor 850 in turn transmits a request signal to the formatter 820. The formatter 820 will in general approve the request if there is space in the main buffer 830 to receive a whole data record and if the processing of any previously-received data is complete. On the other hand, if the main buffer is full, or if existing data is still being processed, the request will be denied. The microprocessor 850 will not grant permission to the host interface 810 to transmit the record data until the formatter 820 is ready. When ready, the host interface 810 transfers a record's worth of data, 16-bits at a time, across the first data bus to the formatter 820.

The protocol for writing a File Mark is similar to writing a record except that, instead of transferring record data across the first data bus 815, the host interface 810 signals to the microprocessor 850 that a File Mark is required. In response, when the formatter 820 is ready, the microprocessor 850 signals the formatter 820 to insert a file mark reserved codeword into the encoded data stream alter the end of the previous record (or File Mark).

It has been stated above that a record is the smallest amount of data recognised by the host computer and the tape drive 800. However, the SCSI protocol, supported by the host computer interface and the tape drive host interface, actually manages data transfer in smaller chunks, known as bursts. Thus, in effect, within each record, the host computer and tape drive 800 read and write data in terms of 'bursts'. SCSI supports this feature to allow for the possibility of servicing multiple devices at the same time. Burst length is a value which can be negotiated by the host computer and tape drive 800 (or in general any device which operates under the SCSI protocol), prior to data transfer, and is commonly set at 32-KBytes or 64-KBytes. Each 16-bit chunk of data passed by the host to the host interface includes 2 bits of parity information, typically added by the sending end of the SCSI bus (e.g. the host computer during a write operation) and checked by the receiving end of the SCSI bus (e.g. the host interface 810 during a write operation). The parity information is used at the receiving end as a simple check on the integrity of the burst data, and is not passed on beyond the host interface 810.

As far as the tape drive 800 is concerned, the handling of data on the per-burst level is generally the same as on the per-record level, in that each burst is transferred only alter a request has been made by the host interface 810 and permission is given by the formatter 820.

The host interface 810 maintains counts of the number of bytes passed out to the formatter 820 during record and burst transfer. By this means, since the number of bytes in a record or a burst is known, the host interface 810 is able to indicate to the formatter 820 when the last byte in a record or burst is reached. Thus, in accordance with the present format, the host interface 810 generates End of Record and Flush signals at the ends of records and bursts respectively. These signals are passed to the logical formatter 820, across the first data bus 815, as 2-bit control signals. In practice, these signals are passed at the same time as the last byte in the record or burst, and the formatter 820 is configured to insert respective End of Record and Flush reserved codewords after the respective last byte. In the event an End of Record and a Flush occur at the same time, the End of Record takes precedence and the formatter 820 only adds an End of Record codeword.

Thus, the host interface 810 provides by means of appropriate signals all information required by the formatter 820 to control the addition of File Mark, End of Record and Flush reserved codewords to the encoded data stream.

For a read operation, the process is generally the reverse of the write process, except that the host interface 810 controls of the timing: that is, the formatter 810 must request permission to send decoded and decompressed data to the host interface 810, a burst, or a record or File Mark, at a time, on the basis of whether the host computer is ready to receive the data.

Hitherto, tape drives known to the present inventors have employed a buffer, in what constitutes a host interface, large enough to receive one or more whole bursts of data. Each burst of data in the buffer is pre-processed, to check the integrity thereof by reference to the parity information, before the bytes of the burst are forwarded on for data processing such as data compression. If the burst is seen to be 'bad' for some reason, the host interface requests re-transmission of the burst. The main reason for this pre-processing check is that once data has entered the data processing stage and has been compressed, the 'burst boundaries', which are typically within records, are lost in the resulting encoded data stream. Thus, it would be very difficult to re-send the burst and place it in the correct position in the processed data stream if the 'bad' burst data had already been processed.

The pre-processing is generally recognised as a bottleneck to data processing, which has hitherto been reduced to some extent by employing expensive SRAM as the buffer memory, to allow rapid memory access.

The present inventors have addressed the bottleneck problem in a different way which has obviated the need for a buffer for pre-processing.

The mechanism for overcoming the stated problem is enabled by the Flush codeword. As has already been described, the Flush codeword can be used to line up any arbitrary point in the host data stream with a word boundary in the encoded data stream. In the present case, the Flush codeword is used at the end of each burst to align the beginning of the next burst with the next 32-bit word boundary in the encoded data stream. Thus, burst boundaries are clearly identifiable, even in a compressed data stream, as the 32-bit boundary following the last Flush codeword. The re-tried, encoded burst can thus simply be written over the 'bad' encoded data in the respective data set, even when the data has been encoded.

The re-writing of a burst to the correct location in a data set is controlled by the formatter 820, which maintains a pointer to the location of the 32-bit word boundary following the last-received Flush codeword stored in the main buffer 830. The pointer value is up-dated as each Flush codeword is received and stored. Thus, when the host interface 810 requests a burst retry, the host interface 810 also signals the formatter 820, via the microprocessor 850, to reset the data set pointer to the last Flush codeword position in the main buffer 830.

In order to restore the history buffer 903, so that it is in the same state for writing the retransmitted burst as it was for writing the originally-transmitted version of the burst, the method requires that the formatter 820 re-positions back to the access point that precedes the Flush codeword. Then, the formatter must read forward to the particular Flush codeword, thereby restoring the history buffer 903 to the same state. An alternative solution here would be to reset the history buffer for encoding a burst retry, in combination with inserting a reset codeword as the first codeword alter the flush codeword.

Thus, the bytes in a burst can be passed to the formatter 820 for compression as they are received. In other words the bottleneck is removed since there is no need to wait to receive the whole burst before forwarding the bytes to the formatter 820. Further, there is no need for a buffer in the host interface 810 which holds one or more whole bursts of data to allow preprocessing.

Parity checking is still required to determine if a burst is 'bad'. The parity check, however, is calculated by the host interface 810 as the bytes pass through the host interface 810, and a resulting parity check figure is compared with the parity information received from the host computer. In the event any data in the burst is 'bad', the host interface 810 requests the host for a burst retry, which is a standard SCSI command. Once processed, the resulting codewords are written over the existing, 'bad' codewords in the main buffer 830, starting from the 32-bit boundary following the previous Flush point.

This principle can be extended for re-positioning to any arbitrary location in the main buffer 830. For example, the host computer can at any time issue the SCSI command 'save pointers'. This command may be interpreted by the host interface 810 as a request to insert a Flush codeword into the encoded data stream, and the position, for whatever reason, can be stored as a pointer by the formatter 820. Indeed, the save pointers command could be issued by the host computer after each burst, to order the tape drive to insert a Flush codeword, thereby removing the onus on the tape drive 800 to add a Flush codewords for burst retries.

### LOGICAL FORMATTER

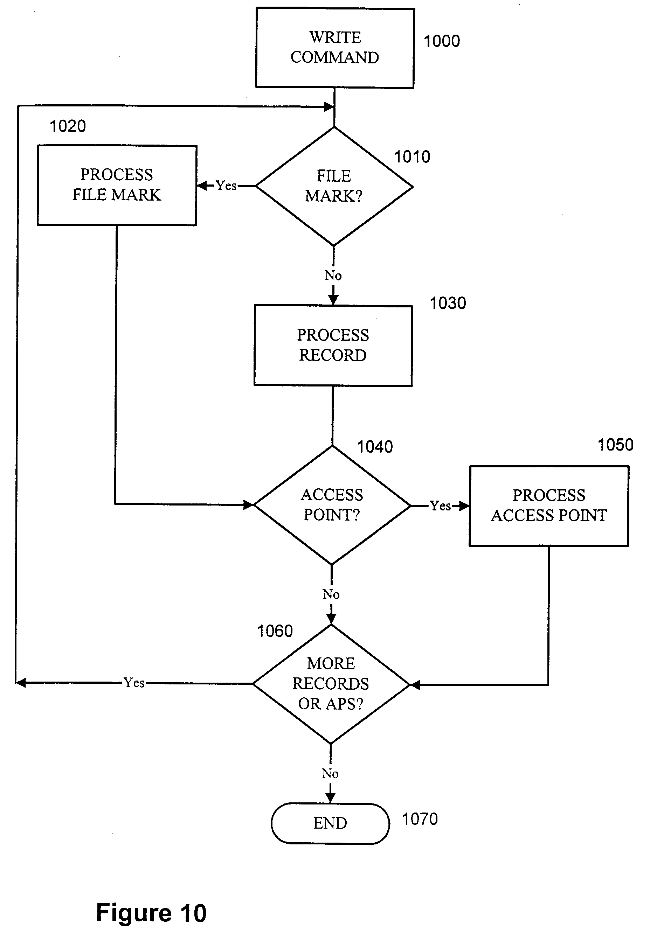

The operation of the formatter 820 will now be described in more detail with reference to the flow diagram in Figure 10, in terms of a write operation.

In the flow diagram, a write process starts in step 1000 after the tape drive 800 receives a write command from the host, and the microprocessor 850 has initialised the tape drive for a write operation. In step 1010, if the write command is to write a File Mark, the host interface 810 sends a File Mark signal to the formatter 820 and, in step 1020, the formatter outputs a File Mark codeword, as has already been described.

If the write command is to write a record, the formatter 820 receives record data from the host interface 810 and the encoder 900 applies Scheme X encoding on a per byte basis, in step 1030, where X can be 1 or 2 depending on criteria which will be described below. Irrespective of which scheme is in operation, all byte data passes through the history buffer 903. Thus, in the case of Scheme 1, the encoder 900 outputs compressed codeword data by reference where possible to codewords existing in the history buffer 903. In the case of Scheme 2, the encoder 900 has a pass-through mode whereby byte values which are received by the encoder 900 are simply passed through and out of the encoder.

As has already been described, burst processing is achieved by inserting a Flush point codeword into the encoded data stream after the last byte of a burnt when the formatter 820 receives a Flush point signal from the host interface 810, and an End of Record codeword is added to the encoded data stream after the last codeword of the record, in response to an End of Record signal from the host interface 810.

After each record or File Mark has been written, the next step, step 1040, is to determine whether an Access Point is required. An Access Point is required, as soon after the start of a new data set as possible. This will in practice be at the beginning of a data set, or after the end of the first part-record in a subsequent data set, if the record started in a previous data set. When an Access Point is required, then, in step 1050, the formatter 820 'holds-off' further data from the host interface 810 after outputting the respective End of Record codeword, by refusing to act on write requests, until any remaining data in the packer 910 has passed to the main buffer 830. Then, the formatter 820 registers the Access Point position (the byte offset from the beginning of the current data set) in the DSIT for the current data set held in the main buffer 830. Thereafter, the formatter 820 outputs the appropriate Reset X codeword and then continues receiving data bytes from the host interface 810.

Finally, in step 1060, the process iterates to step 1030 to process any further records or File Marks, or the process ends in step 1070.

With regard to which encoding scheme is in operation at any time, the formatter 820 includes monitoring functionality in the form of a comparator 907 to monitor the compression ratio of data encoded using Scheme 1. Over a given 'period', measured, say, as a number of input bytes to the encoder 900, a count of the number of output bits is made. The number of input bits is known (8 times the period), and a compression ratio is calculable. If the ratio falls below a 'threshold', then the formatter 820 swaps from Scheme 1 to Scheme 2. When in Scheme 2, the Scheme 1 encoding is in effect still enabled, as all input data passes through the history buffer 903, and potential compression ratio measurements continue to be made. If the ratio rises above a certain threshold, a swap back to Scheme 1 is enacted. The period and threshold are configurable, and the threshold for a swap from Scheme 1 to scheme 2 can be different from the threshold for a swap from Scheme 2 to Scheme 1, as could the period.

The measurement of the output bits can come from the encoder 900 output (before packing) as the number of bits to be packed is known from the literals (9 bits) or copy pointers (13 to 23 bits) passed to the packer 910. The packer output cannot be used directly as it is used during Scheme 2, when the compression ratio will be substantially 1:1

Thus, when Scheme 1 is in operation (which is the default for the first record of the first data set, and which is determined by a Reset 1 codeword), if the compression ratio drops below, for example, 1:1, the formatter 820 inserts a Scheme 2 codeword into the encoded data stream. Thereafter, record bytes received by the formatter 820 are passed through the encoder 900 without being encoded.

The monitoring of the compression ratio continues during Scheme 2 operation. If the compression ratio is seen to rise above, for example, 1.5:1 (that is to say, there is an element of hysteresis), the encoder 900 inserts a Scheme 1 codeword, and subsequent record data bytes are output using Scheme 1 encoding.

The operation of the formatter 820 for a read operation is the opposite of the write operation, with data decompression being applied to the encoded data by the encoder 900 (acting as a decoder) instead of compression. In the present embodiment, decompression is more straight forward than compression, since compression ratio monitoring is not required; decompression simply follows the Scheme X and Reset X codewords which are received by the formatter 820. Apart from the reserved codewords, which are interpreted by the packer (acting to unpack), the data codewords are simply decoded by applying the respective LZ-based decoding algorithm, which is well known.

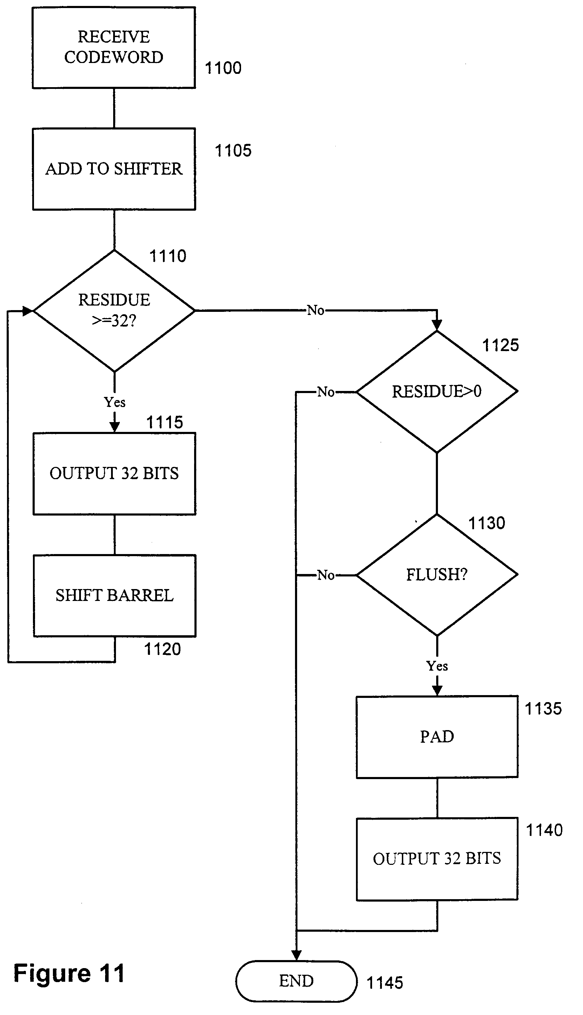

The operation of the packer 910 will now be described in more detail with reference to the flow diagram in Figure 11.

The packer 910 operates on codeword data resulting from the encoder 910. Data is passed to the packer 920, in step 1100, a codeword at a time. As each codeword is received, the packer 920 refers to the lookup table 915 to determine whether the codeword is a reserved codeword which needs to be padded to a word boundary in the data set. The lookup table 915 contains an entry for each reserved codeword, which entry includes an indication whether the padding for the codeword is for 1's or 0's. These entries are also used during decoding to determine which codewords are reserved codewords, and how the reserved codewords should be processed.

Where necessary, a 0's flush requirement signifies that the encoded data stream needs padding with zeros after the associated reserved codeword and up to the next 32-bit word boundary. Likewise, a 1's flush requirement signifies that the encoded data stream needs padding with ones after the associated reserved codeword up to the next 32-bit word boundary (a 1's requirement only occurs for End Marker codewords in the present embodiment).

In step 1105, the received codeword data is passed to a 'barrel shifter' function in the packer, which is similar in operation to a FIFO register, which in effect operates to receive a stream of data bits into a 'top' end thereof, pass the bits through, and output 32-bit wide words of data from a 'bottom' end thereof.

The barrel shifter operates as follows. In step 1110, if the addition of the codeword data increases the number of bits already in the barrel shifter (if indeed there were already any bits therein) to 32-bits or more, then, in step 1115, the shifter shifts the bottom 32-bits out and the packer 910 outputs the 32-bits to the current data set in the main buffer 830. Then, in step 1120, the remaining bits in the barrel shifter (if there are any bits remaining) are shifted down by 32-bits to the bottom of the barrel shifter. The process then iterates back to step 1110, where there is a further check on the number of bits in the shifter.

If there are fewer than 32-bits in the shifter, then, in step 1125 the packer checks whether there are any bits at all remaining in the shifter. In there are no bits remaining, then the packer process ends in step 1145. If there are any bits remaining then, in step 1130, the flush to word boundary requirement is assessed. If there is a flush requirement then, in step 1135, the barrel shifter is filled, or 'padded', with either zeros or ones, depending on the flush requirement, from after the last-received codeword bit in the shifter and up to a 32-bit threshold. Next, in step 1140, the shifter shifts the 32-bits out and the packer 920 outputs the 32-bit word to the data set in the main buffer 830. Finally, in step 1145, the process ends for the received codeword data.

In this way, the packer 826 controls the transfer of encoded data in terms of 32-bit words and controls the bit-padding required for flushing codewords to 32-bit boundaries in each data set.

For a read operation, the packer also acts to 'unpack' the data read from tape. This operation is the reverse of 'packing' in that the packer 920 receives 32-bit words and returns codeword bytes to the encoder 900 (acting now as a decoder). In doing so, the packer 920 (acting as an unpacker) refers to the lookup table 915, to determine if a codeword is a reserved codeword, and removes any padding associated with reserved codewords, which was previously added in the packing process. Also, the unpacker removes End Marker and End of Record reserved codewords, since they were added to the data stream by the encoder 900 and have no meaning as far as the host computer is concerned. Further, the unpacker strips out each File Mark reserved codeword and generates an appropriately-timed signal to the host interface 810, which interprets the signals as a File Mark command to be returned to the host computer.

The DSIT values for a data set are generated by the formatter 820 on the basis of the signals received from the host interface 810: in particular the End of Record and File Mark signals.

The passing of data from the main buffer 830 to the read/write circuit is controlled by microprocessor 850 on a per data set basis. In other words, the microprocessor will not initiate data transfer from the main buffer 830 to tape until at least one data set is complete. Conversely, when reading data from tape, the microprocessor 850 will not allow the tape drive 800 to read data until there is sufficient room in the main buffer 830.

The above text describes in detail one particular embodiment of the invention. The skilled reader will appreciate that the essence of the disclosed invention, which is embodied in the claims, can be usefully applied in many other situations. Some examples are: hard disk systems; and optically writable and/or readable disk systems, including DVD-RAM (digital video disk-RAM).

## Claims

1. A method of formatting host data, including the step of:
encoding members of a pre-defined group of data with m-bit codewords and encoding other data with codewords in excess of m-bits long to produce an encoded data stream, wherein all other data are encoded with codewords which have a common m-bit root sequence, and wherein the common m-bit root sequence is not itself representative of any of the members of the pre-defined group of data.

2. A method according to claim 1, wherein the other data are encoded with n-bit codewords, where n is greater than m.

3. A method according to claim 2, wherein the m-bit root sequence comprises a reserved one of the set of possible m-bit codewords.

4. A method according to claim 3, wherein there are m members in the first group of data and wherein the reserved m-bit root sequence forms part of a longer, p-bit, codeword, which is reserved to represent one of the m possible members.

5. A method according to claim 4, wherein m=8, n=13 and p=9.

6. A method according to claim 5, wherein the other data have a root sequence of 0xff, and a general codeword form represented by 0xff + 1 + #, where # is a 4-bit value.

7. A method according to claim 6, wherein the codeword represented by 0xff + 0 is a 9-bit codeword which represents the 8-bit value 0xff.

8. A method according to claim 7, wherein other data comprises host data structure information and/or control information.

9. A method of writing host data to tape, the method comprising the steps of;
receiving host data to be written to tape;
formatting the received host data, including the step of encoding members of a pre-defined group of data with m-bit codewords and encoding other data with codewords in excess of m-bits long to produce an encoded data stream, wherein all other data are encoded with codewords which have a common m-bit root sequence, and wherein the common m-bit root sequence is not representative of any of the members of the pre-defined group of data; and writing the data to tape.

10. A method of decoding data formatted in accordance with any one of claims 1 to 8, comprising:
reading m-bits of formatted data; and
if the m-bits of data are not the m-bit root sequence, decoding the codeword into a member of the pre-defined group of codewords; or
if the m-bits of data represent the m-bit root sequence, reading a pre-defined number of further bits and, on the basis of the further bits, decoding the combined root sequence and further bits into the resepctive other data.

11. Apparatus configured to decode data in accordance with the method of claim 10.

12. Apparatus configured for formatting data in accordance with the method of any one of claims 1 to 8.

13. Apparatus for storing data to tape, the apparatus comprising:
interface means for receiving host data from a host computer;
data formatting means for converting the host data into a form suitable for writing the data to tape, the data formatting means including encoding means for encoding members of a pre-defined group of data with m-bit codewords and encoding other data with codewords in excess of m-bits long to produce an encoded data stream, wherein all other data are encoded with codewords which have a common m-bit root sequence, and wherein the common m-bit root sequence is not representative of any of the members of the pre-defined group of data; and
data writing means for writing formatted data to tape.

14. A data storage medium holding thereon data formatted in accordance with any one of claims 1 to 8.

15. An ASIC configured to encode data in accordance with any one of claims 1 to 8.

16. An ASIC configured to decode data comprising m-bit codewords representative of a pre-defined group of data and codewords in excess of m-bits long representative of other data, wherein all codewords representative of other data have a common m-bit root sequence, and wherein the common m-bit root sequence is not itself representative of any of the members of the pre-defined group of data.

17. Encoded data comprising a stream of m-bit codewords representative of members of a pre-defined group of data and codewords in excess of m-bits long representative of other data, wherein all codewords representative of other data have a common m-bit root sequence, and wherein the common m-bit root sequence is not itself representative of any of the members of the pre-defined group of data.
